# FASCICULE DE BREVET EUROPEEN

(11) **EP 3 686 058 B1**
(45) Date de publication et mention de la délivrance du brevet: **04.08.2021**
(21) Numéro de dépôt: 20152308.1
(22) Date de dépôt: 16.01.2020
(51) Int. Cl.: B60R 5/04

(54) **SYSTÈME DE RECOUVREMENT D'UN COMPARTIMENT À BAGAGES DE VÉHICULE AUTOMOBILE**
ABDECKVORRICHTUNG EINES KOFFERRAUMFACHS EINES KRAFTFAHRZEUGS
SYSTEM FOR COVERING A LUGGAGE COMPARTMENT OF A MOTOR VEHICLE

(30) Priorité: 25.01.2019 FR 1900677
(43) Date de publication de la demande: 29.07.2020
(73) Titulaire: TREVES PRODUCTS, SERVICES & INNOVATION, 75008 Paris (FR)
(72) Inventeur: BONFILS, Xavier, 51100 Reims (FR); BRILLON, Eric, 51390 Rosnay (FR)
(74) Mandataire: Sayettat, Julien Christian

(56) Documents cités:
- WO-A1-2007/051710
- WO-A1-2012/108241
- DE-A1-102016 109 289
- FR-A1- 2 993 218

## Description

L'invention concerne un système de recouvrement d'un compartiment à bagages de véhicule automobile et un cache-bagages d'un tel système.

Le document FR2993218 montre le préambule de la revendication 1, plus précisément un système de recouvrement d'un compartiment à bagages de véhicule automobile, ledit système comprenant deux ébénisteries latérales de garnissage dudit compartiment et un cache-bagages, ledit cache-bagages comprenant :
- un carter pourvu d'une fente transversale, de deux embouts latéraux montés en extrémités dudit carter et d'un arbre d'enroulement dont les extrémités sont montées en rotation sur lesdits embouts selon un axe transversal, ledit arbre étant actionné en rotation selon un sens d'enroulement par un moyen ressort, lesdits embouts étant pourvus de moyens de verrouillage réversible coopérant avec des moyens réciproques respectifs prévus en partie avant desdites ébénisteries, lesdits moyens et moyens réciproques étant agencés de sorte qu'ils puissent être mis en coopération par mise en position dudit cache-bagages avec lesdits embouts mis en position angulaire décalée, selon ledit axe, par rapport à la position angulaire nominale qu'ils occupent quand ledit cache-bagages est monté sur lesdites ébénisteries, la mise en rotation desdits embouts dans ladite position nominale activant lesdits moyens de verrouillage,
- un rideau passant par ladite fente et présentant un bord avant associé audit arbre de manière à pouvoir être enroulé autour sous l'action dudit moyen ressort pour passer réversiblement d'une configuration déroulée de recouvrement des bagages à une configuration enroulée d'accès aux bagages,
- une traverse de rigidification d'un bord arrière dudit rideau, ladite traverse étant pourvue de deux doigts transversaux saillant latéralement et pouvant coopérer avec des moyens de réception prévus en arrière desdites ébénisteries pour maintenir ledit rideau en configuration déroulée.

Avec un tel agencement, le montage du cache bagages se fait par inclinaison dudit cache bagages par rapport à l'axe transversal et par rotation dudit cache bagages pour réaliser son verrouillage.

A l'inverse, son démontage se fait par rotation en sens inverse du sens de montage.

Pour réaliser la rotation dans un sens ou dans l'autre, en vue de verrouiller ou déverrouiller le cache-bagages des ébénisteries, il est connu de saisir à pleines main le carter et de l'actionner en rotation.

Cependant, une telle manœuvre peut s'avérer peu ergonomique, la personne la réalisant étant obligée de se pencher de façon importante et de se mettre en porte à faux accentué pour atteindre le carter.

En outre, lorsque le cache-bagages est démonté, le rideau étant alors enroulé, les doigts sont susceptibles d'être détériorés en cas de choc avec l'extérieur.

L'invention a pour but de pallier ces inconvénients.

A cet effet, l'invention propose un système de recouvrement selon la revendication 1.

Selon l'invention, ledit système présente les caractéristiques suivantes :
- lesdits embouts sont chacun pourvu d'un logement en emboitement d'un doigt respectif quand ledit rideau est amené en configuration enroulée,
- lesdits doigts et logements sont agencés de manière à assurer une solidarisation en rotation entre eux, de sorte que l'actionnement en rotation de ladite traverse selon ledit axe quand ledit rideau est en configuration enroulée entraine un positionnement desdits embouts en position angulaire décalée permettant un démontage dudit cache-bagages desdites ébénisteries.

Dans cette description, les termes de positionnement dans l'espace (haut, transversal, latéral, avant, arrière, horizontal, vertical, longitudinal,...) sont pris en référence au système disposé dans le véhicule.

Avec l'agencement proposé, la personne voulant verrouiller ou déverrouiller le cache-bagages dispose d'une meilleure ergonomie.

En effet, la traverse se situant en arrière du carter, la personne réalisant la manœuvre a moins à se pencher et à se mettre en porte à faux.

En outre, lorsque le cache-bagages est démonté, les doigts sont intégrés dans leurs logements, ce qui les protège des interactions avec l'extérieur et empêche leur détérioration accidentelle.

Selon un deuxième aspect, l'invention propose un cache-bagages d'un tel système.

D'autres particularités et avantages de l'invention apparaîtront dans la description qui suit, faite en référence aux figures jointes dans lesquelles :

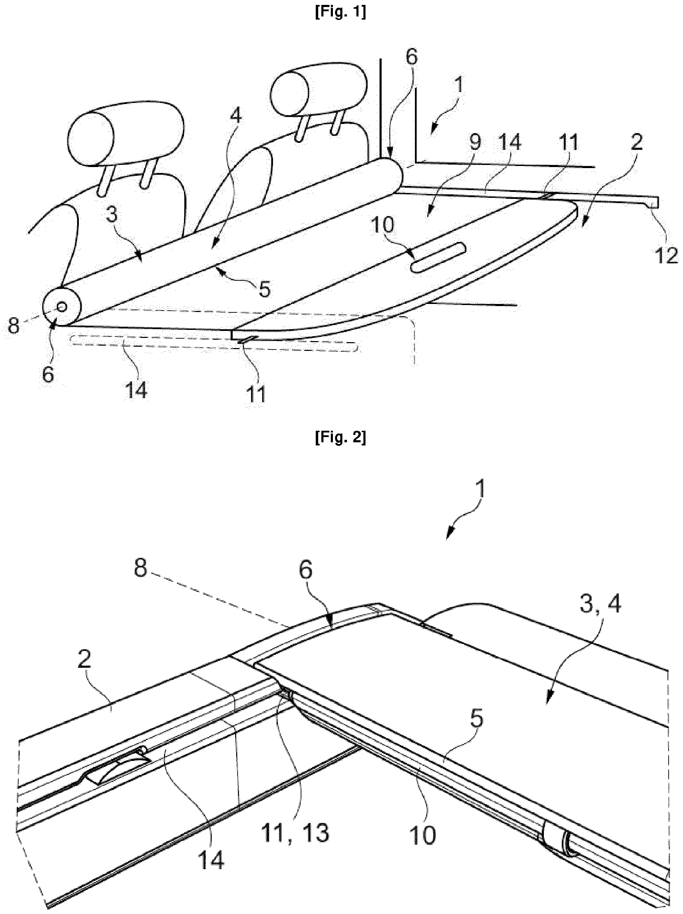

[Fig.1] est une vue générale schématique en perspective d'un système selon une réalisation, le rideau étant en configuration semi-déroulée,
[Fig. 2] est une vue en perspective partielle dudit système, le rideau étant en configuration enroulée,

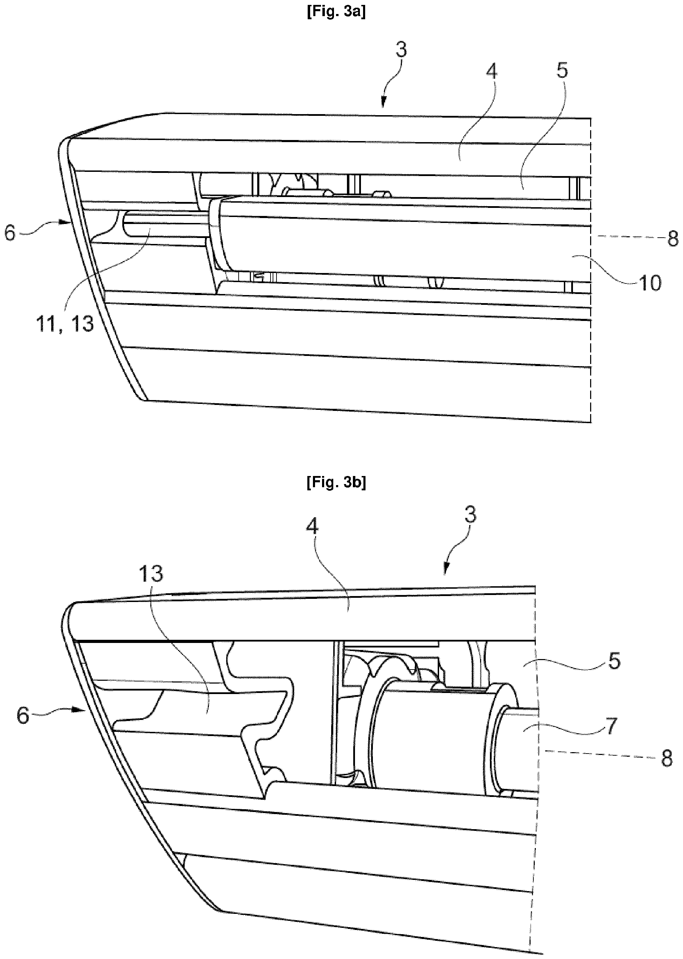

[Fig. 3a] est une vue en perspective partielle du cache-bagages dudit système, le rideau étant en configuration enroulée,
[Fig. 3b] ne représentant que le carter pourvu de ses embouts,

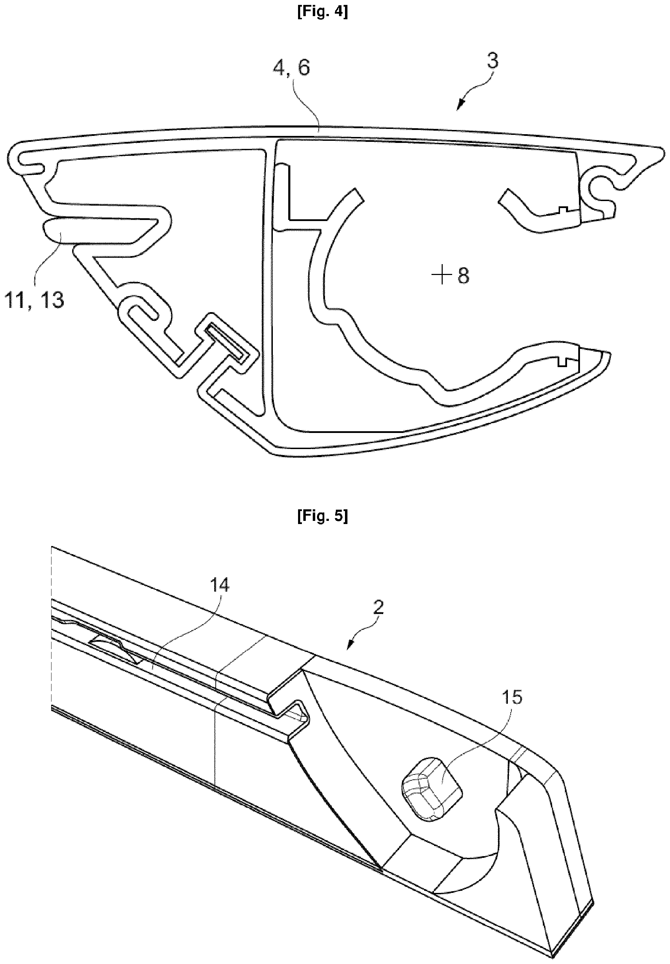

[Fig. 4] est une section verticale longitudinale de la figure 3a,
[Fig. 5] est une vue partielle d'une ébénisterie dudit système représentant un moyen de verrouillage réciproque,

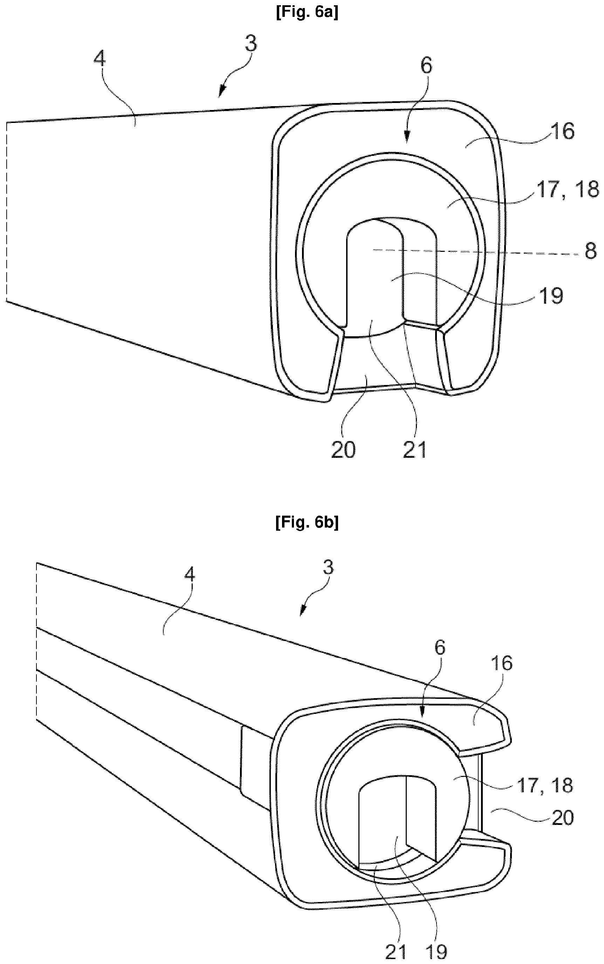

les figures 6 sont des vues partielles en perspective du cache-bagages dudit système,
[Fig. 6a] représentant un moyen de verrouillage désactivé,
[Fig. 6b] représentant un moyen de verrouillage activé.

En référence aux figures, on décrit un système 1 de recouvrement d'un compartiment à bagages de véhicule automobile, ledit système comprenant deux ébénisteries 2 latérales de garnissage dudit compartiment et un cache-bagages 3, ledit cache-bagages comprenant :
- un carter 4 pourvu d'une fente 5 transversale, de deux embouts 6 latéraux montés en extrémités dudit carter et d'un arbre d'enroulement 7 dont les extrémités sont montées en rotation sur lesdits embouts selon un axe transversal 8, ledit arbre étant actionné en rotation selon un sens d'enroulement par un moyen ressort, non visible sur les figures, lesdits embouts étant pourvus de moyens de verrouillage réversible coopérant avec des moyens réciproques respectifs prévus en partie avant desdites ébénisteries, lesdits moyens et moyens réciproques étant agencés de sorte qu'ils puissent être mis en coopération par mise en position dudit cache-bagages avec lesdits embouts mis en position angulaire décalée, selon ledit axe, par rapport à la position angulaire nominale qu'ils occupent quand ledit cache-bagages est monté sur lesdites ébénisteries, la mise en rotation desdits embouts dans ladite position nominale activant lesdits moyens de verrouillage,
- un rideau 9 passant par ladite fente et présentant un bord avant associé audit arbre de manière à pouvoir être enroulé autour sous l'action dudit moyen ressort pour passer réversiblement d'une configuration déroulée de recouvrement des bagages à une configuration enroulée d'accès aux bagages,
- une traverse 10 de rigidification d'un bord arrière dudit rideau, ladite traverse étant pourvue de deux doigts 11 transversaux saillant latéralement et pouvant coopérer avec des moyens de réception 12 prévus en arrière desdites ébénisteries pour maintenir ledit rideau en configuration déroulée,
ledit système présentant en outre les caractéristiques suivantes :
- lesdits embouts sont chacun pourvu d'un logement 13 en emboitement d'un doigt 11 respectif quand ledit rideau est amené en configuration enroulée,
- lesdits doigts et logements sont agencés de manière à assurer une solidarisation en rotation entre eux - lesdits doigts étant ici de section oblongue -, de sorte que l'actionnement en rotation de ladite traverse selon ledit axe - notamment par actionnement de la traverse vers le haut - quand ledit rideau est en configuration enroulée entraine un positionnement desdits embouts en position angulaire décalée permettant un démontage dudit cache-bagages desdites ébénisteries.

Selon la réalisation représentée, les ébénisteries 2 sont chacune pourvue d'un rail 14 de coulissement d'un doigt 11 respectif lors du passage du rideau 9 d'une configuration à l'autre.

Selon la réalisation représentée les ébénisteries 2 sont chacune pourvue en partie avant d'un plot 15 saillant transversalement vers l'intérieur dudit compartiment, ledit plot formant moyen de verrouillage réciproque, un embout 6 étant pourvu d'un moyen de verrouillage comprenant un élément externe 16 pourvu d'un logement externe 17 et un élément interne 18 pourvu d'un logement interne 19, lesdits logements débouchant vers l'extérieur dudit compartiment et étant pourvus d'une ouverture radiale externe 20 et interne 21 respective, sachant que :
- ledit élément interne est logé dans ledit logement externe, ledit logement interne étant dimensionné de manière à pouvoir y loger un plot 15 respectif,
- l'un desdits éléments est fixe par rapport audit embout et l'autre desdits éléments est monté mobile en rotation sur ledit embout selon l'axe transversal 8 de manière à pouvoir passer réversiblement d'une configuration angulaire de déverrouillage, où lesdites ouvertures sont dans le prolongement l'une de l'autre, pour permettre une introduction dudit plot dans ledit logement interne, à une configuration angulaire de verrouillage, où lesdites ouvertures sont décalées l'une par rapport à l'autre, de manière à refermer ladite ouverture interne et à bloquer ledit plot dans ledit logement interne.

Selon la réalisation représentée, l'élément externe 16 est fixe et l'élément interne 18 est mobile en rotation, ledit élément interne et le plot 15 correspondant étant agencés de sorte que ledit plot soit solidaire en rotation dudit élément interne quand il est logé dans le logement interne 19.

Selon une réalisation, l'écart entre les configurations angulaires de déverrouillage et de verrouillage est compris entre 30° et 90°.

Selon la réalisation représentée, la traverse 10 est en forme générale de plaque s'étendant sensiblement horizontalement, saillant par exemple de la fente 5 du carter 4 d'une distance maximale supérieure à 80 mm, ce qui la rapproche d'autant d'un utilisateur voulant verrouiller ou déverrouiller le cache-bagages 3, avec pour résultat de donner une meilleure ergonomie pour réaliser la manœuvre.

On décrit enfin un cache bagages 3 d'un tel système 1, ledit cache-bagages comprenant :
- un carter 4 pourvu d'une fente 5 transversale, de deux embouts 6 latéraux montés en extrémités dudit carter et d'un arbre d'enroulement dont les extrémités sont montées en rotation sur lesdits embouts selon un axe transversal 8, ledit arbre étant actionné en rotation selon un sens d'enroulement par un moyen ressort, lesdits embouts étant pourvus de moyens de verrouillage réversible destinés à coopérer avec des moyens réciproques respectifs prévus en partie avant des ébénisteries 2,
- un rideau 9 passant par ladite fente et présentant un bord avant associé audit arbre de manière à pouvoir être enroulé autour sous l'action dudit moyen ressort pour passer réversiblement d'une configuration déroulée de recouvrement des bagages à une configuration enroulée d'accès aux bagages,
- une traverse 10 de rigidification d'un bord arrière dudit rideau, ladite traverse étant pourvue de deux doigts 11 transversaux saillant latéralement étant destinés à coopérer avec des moyens de réception 12 prévus en arrière desdites ébénisteries pour maintenir ledit rideau en configuration de recouvrement,
ledit cache-bagages présentant en outre les caractéristiques suivantes :
- lesdits embouts sont chacun pourvu d'un logement 13 en emboitement d'un doigt 11 respectif quand ledit rideau est amené en configuration enroulée,
- lesdits doigts et logements sont agencés de manière à assurer une solidarisation en rotation entre eux.

## Revendications

1. Système (1) de recouvrement d'un compartiment à bagages de véhicule automobile, ledit système comprenant deux ébénisteries (2) latérales de garnissage dudit compartiment et un cache-bagages (3), ledit cache-bagages comprenant :
• un carter (4) pourvu d'une fente (5) transversale, de deux embouts (6) latéraux montés en extrémités dudit carter et d'un arbre d'enroulement (7) dont les extrémités sont montées en rotation sur lesdits embouts selon un axe transversal (8), ledit arbre étant actionné en rotation selon un sens d'enroulement par un moyen ressort, lesdits embouts étant pourvus de moyens de verrouillage réversible coopérant avec des moyens réciproques respectifs prévus en partie avant desdites ébénisteries, lesdits moyens et moyens réciproques étant agencés de sorte qu'ils puissent être mis en coopération par mise en position dudit cache-bagages avec lesdits embouts mis en position angulaire décalée, selon ledit axe, par rapport à la position angulaire nominale qu'ils occupent quand ledit cache-bagages est monté sur lesdites ébénisteries, la mise en rotation desdits embouts dans ladite position nominale activant lesdits moyens de verrouillage,
• un rideau (9) passant par ladite fente et présentant un bord avant associé audit arbre de manière à pouvoir être enroulé autour sous l'action dudit moyen ressort pour passer réversiblement d'une configuration déroulée de recouvrement des bagages à une configuration enroulée d'accès aux bagages,
• une traverse (10) de rigidification d'un bord arrière dudit rideau, ladite traverse étant pourvue de deux doigts (11) transversaux saillant latéralement et pouvant coopérer avec des moyens de réception (12) prévus en arrière desdites ébénisteries pour maintenir ledit rideau en configuration déroulée,
ledit système étant **caractérisé en ce que** :
• lesdits embouts sont chacun pourvu d'un logement (13) en emboitement d'un doigt (11) respectif quand ledit rideau est amené en configuration enroulée,
• lesdits doigts et logements sont agencés de manière à assurer une solidarisation en rotation entre eux, de sorte que l'actionnement en rotation de ladite traverse selon ledit axe quand ledit rideau est en configuration enroulée entraine un positionnement desdits embouts en position angulaire décalée permettant un démontage dudit cache-bagages desdites ébénisteries.

2. Système selon la revendication 1, **caractérisé en ce que** les ébénisteries (2) sont chacune pourvue d'un rail (14) de coulissement d'un doigt (11) respectif lors du passage du rideau (9) d'une configuration à l'autre.

3. Système selon l'une des revendications 1 ou 2, **caractérisé en ce que** les ébénisteries (2) sont chacune pourvue en partie avant d'un plot (15) saillant transversalement vers l'intérieur dudit compartiment, ledit plot formant moyen de verrouillage réciproque, un embout (6) étant pourvu d'un moyen de verrouillage comprenant un élément externe (16) pourvu d'un logement externe (17) et un élément interne (18) pourvu d'un logement interne (19), lesdits logements débouchant vers l'extérieur dudit compartiment et étant pourvus d'une ouverture radiale externe (20) et interne (21) respective, sachant que :
• ledit élément interne est logé dans ledit logement externe, ledit logement interne étant dimensionné de manière à pouvoir y loger un plot respectif,
• l'un desdits éléments est fixe par rapport audit embout et l'autre desdits éléments est monté mobile en rotation sur ledit embout selon l'axe transversal (8) de manière à pouvoir passer réversiblement d'une configuration angulaire de déverrouillage, où lesdites ouvertures sont dans le prolongement l'une de l'autre, pour permettre une introduction dudit plot dans ledit logement interne, à une configuration angulaire de verrouillage, où lesdites ouvertures sont décalées l'une par rapport à l'autre, de manière à refermer ladite ouverture interne et à bloquer ledit plot dans ledit logement interne.

4. Système selon la revendication 3, caractérisé en ce l'élément externe (16) est fixe et l'élément interne (18) est mobile en rotation, ledit élément interne et le plot (15) correspondant étant agencés de sorte que ledit plot soit solidaire en rotation dudit élément interne quand il est logé dans le logement interne (19).

5. Système selon l'une quelconque des revendications 1 à 4, **caractérisé en ce que** l'écart entre les configurations angulaires de déverrouillage et de verrouillage est compris entre 30° et 90°.

6. Système selon l'une quelconque des revendications 1 à 5, **caractérisé en ce que** la traverse (10) est en forme générale de plaque s'étendant sensiblement horizontalement.

7. Cache bagages (3) d'un système (1) selon l'une quelconque des revendications précédentes, ledit cache-bagages comprenant :
• un carter (4) pourvu d'une fente (5) transversale, de deux embouts (6) latéraux montés en extrémités dudit carter et d'un arbre d'enroulement dont les extrémités sont montées en rotation sur lesdits embouts selon un axe transversal (8), ledit arbre étant actionné en rotation selon un sens d'enroulement par un moyen ressort, lesdits embouts étant pourvus de moyens de verrouillage réversible destinés à coopérer avec des moyens réciproques respectifs prévus en partie avant des ébénisteries (2),
• un rideau (9) passant par ladite fente et présentant un bord avant associé audit arbre de manière à pouvoir être enroulé autour sous l'action dudit moyen ressort pour passer réversiblement d'une configuration déroulée de recouvrement des bagages à une configuration enroulée d'accès aux bagages,
• une traverse (10) de rigidification d'un bord arrière dudit rideau, ladite traverse étant pourvue de deux doigts (11) transversaux saillant latéralement étant destinés à coopérer avec des moyens de réception (12) prévus en arrière desdites ébénisteries pour maintenir ledit rideau en configuration de recouvrement,
ledit cache-bagages étant **caractérisé en ce que** :
• lesdits embouts sont chacun pourvu d'un logement (13) en emboitement d'un doigt (11) respectif quand ledit rideau est amené en configuration enroulée,
• lesdits doigts et logements sont agencés de manière à assurer une solidarisation en rotation entre eux.

## Patentansprüche

1. System (1) zum Abdecken eines Gepäckfachs eines Kraftfahrzeugs, wobei das System zwei seitliche Verkleidungsleisten (2) des Fachs und eine Gepäckabdeckung (3) umfasst, wobei die Gepäckabdeckung umfasst:
• ein Gehäuse (4), das mit einem transversalen Schlitz (5), mit zwei seitlichen Spitzen (6), die an den Enden des Gehäuses angebracht sind und einer Wickelwelle (7), deren Enden auf den Spitzen gemäß einer transversalen Achse (8) rotatorisch angebracht sind, versehen ist, wobei die Welle von einem Federmittel gemäß einer Wickelrichtung rotatorisch betätigt wird, wobei die Spitzen mit Mitteln zum reversiblen Verriegeln versehen sind, die mit jeweiligen reziproken Mitteln zusammenwirken, die teilweise vor den Leisten vorgesehen sind, wobei die Mittel und reziproken Mittel derart eingerichtet sind, dass sie durch Inpositionversetzen der Gepäckabdeckung mit den gemäß der Achse in versetzte Winkelposition versetzten Spitzen im Verhältnis zu der nominalen Winkelposition, die sie einnehmen, wenn die Gepäckabdeckung auf den Leisten angebracht ist, in Zusammenwirken versetzbar sind, wobei durch das Inrotationversetzen der Spitzen in der nominalen Position die Verriegelungsmittel aktiviert werden,
• einen Vorhang (9), der durch den Schlitz verläuft und einen vorderen Rand aufweist, der der Welle derart zugeordnet ist, dass er unter der Wirkung des Federmittels darum wickelbar ist, um reversibel aus einer abgewickelten Abdeckkonfiguration des Gepäcks in eine aufgewickelte Zugangskonfiguration zu dem Gepäck zu wechseln,
• eine Versteifungstraverse (10) eines hinteren Randes des Vorhangs, wobei die Traverse mit zwei transversalen Fingern (11) versehen ist, die seitlich hervorstehen und mit Aufnahmemitteln (12) zusammenwirken können, die hinten an den Leisten vorgesehen sind, um den Vorhang in abgewickelter Konfiguration zu halten,
wobei das System **dadurch gekennzeichnet ist, dass**:
• die Spitzen jeweils mit einer Rastaufnahme (13) eines jeweiligen Fingers (11) versehen sind, wenn der Vorhang in die aufgewickelte Konfiguration geführt ist,
• die Finger und Aufnahmen derart eingerichtet sind, dass eine feste Rotationsverbindung zwischen ihnen gesichert ist, so dass die Rotationsbetätigung der Traverse gemäß der Achse, wenn der Vorhang in aufgewickelter Konfiguration ist, eine Positionierung der Spitzen in versetzte Winkelposition bewirkt, die eine Demontage der Gepäckabdeckung von den Leisten ermöglicht.

2. System nach Anspruch 1, **dadurch gekennzeichnet, dass** jede der Leisten (2) mit einer Gleitschiene (14) eines jeweiligen Fingers (11) beim Wechseln des Vorhangs (9) von einer Konfiguration in die andere versehen ist.

3. System nach einem der Ansprüche 1 oder 2, **dadurch gekennzeichnet, dass** jede der Leisten (2) im vorderen Teil mit einem Vorsprung (15) versehen ist, der transversal in das Innere des Fachs hervorsteht, wobei der Vorsprung ein reziprokes Verriegelungsmittel bildet, wobei eine Spitze (6) mit einem Verriegelungsmittel versehen ist, das ein äußeres Element (16) umfasst, das mit einer äußeren Aufnahme (17) versehen ist, und ein inneres Element (18), das mit einer inneren Aufnahme (19) versehen ist, wobei die Aufnahmen nach außerhalb des Fachs ausmünden und mit einer jeweiligen äußeren (20) und inneren (21) radialen Öffnung versehen ist, wobei:
• das innere Element in der äußeren Aufnahme untergebracht ist, wobei die innere Aufnahme derart bemessen ist, dass dort ein jeweiliger Vorsprung aufnehmbar ist,
• das eine von den Elementen in Bezug auf die Spitze fest ist und das andere von den Elementen auf der Spitze gemäß der transversalen Achse (8) rotatorisch beweglich angebracht ist, so dass es reversibel aus einer Entriegelungs-Winkelkonfiguration, in der die Öffnungen in Verlängerung zueinander sind, um ein Einsetzen des Vorsprungs in die innere Aufnahme zu erlauben, in eine Verriegelungs-Konfiguration, in der die Öffnungen zueinander versetzt sind, derart wechseln kann, dass die innere Öffnung verschlossen und der Vorsprung in der inneren Aufnahme blockiert ist.

4. System nach Anspruch 3, **dadurch gekennzeichnet, dass** das äußere Element (16) fest ist und das innere Element (18) rotatorisch beweglich ist, wobei das innere Element und der entsprechende Vorsprung (15) derart eingerichtet sind, dass der Vorsprung mit dem inneren Element rotatorisch fest verbunden ist, wenn er in der inneren Aufnahme (19) untergebracht ist.

5. System nach einem der Ansprüche 1 bis 4, **dadurch gekennzeichnet, dass** der Unterschied zwischen den Entriegelungs- und Verriegelungs-Winkelkonfigurationen zwischen 30° und 90° liegt.

6. System nach einem der Ansprüche 1 bis 5, **dadurch gekennzeichnet, dass** die Traverse (10) allgemein die Form einer Platte hat, die sich etwa horizontal erstreckt.

7. Gepäckabdeckung (3) eines Systems (1) nach einem der vorangehenden Ansprüche, wobei die Gepäckabdeckung umfasst:
• ein Gehäuse (4), das mit einem transversalen Schlitz (5), mit zwei seitlichen Spitzen (6), die an den Enden des Gehäuses angebracht sind und einer Wickelwelle, deren Enden auf den Spitzen gemäß einer transversalen Achse (8) rotatorisch angebracht sind, versehen ist, wobei die Welle von einem Federmittel gemäß einer Wickelrichtung rotatorisch betätigt wird, wobei die Spitzen mit Mitteln zum reversiblen Verriegeln versehen sind, die bestimmt sind, mit jeweiligen reziproken Mitteln zusammenzuwirken, die teilweise vor den Leisten (2) vorgesehen sind,
• einen Vorhang (9), der durch den Schlitz verläuft und einen vorderen Rand aufweist, der der Welle derart zugeordnet ist, dass er unter der Wirkung des Federmittels darum wickelbar ist, um reversibel aus einer abgewickelten Abdeckkonfiguration des Gepäcks in eine aufgewickelte Zugangskonfiguration zu dem Gepäck zu wechseln,
• eine Versteifungstraverse (10) eines hinteren Randes des Vorhangs, wobei die Traverse mit zwei transversalen Fingern (11) versehen ist, die seitlich hervorstehen zum Zusammenwirken mit Aufnahmemitteln (12) bestimmt sind, die hinten an den Leisten vorgesehen sind, um den Vorhang in Abdeckkonfiguration zu halten,
wobei die Gepäckabdeckung **dadurch gekennzeichnet ist, dass**:
• die Spitzen jeweils mit einer Rastaufnahme (13) eines jeweiligen Fingers (11) versehen sind, wenn der Vorhang in die aufgewickelte Konfiguration geführt ist,
• die Finger und Aufnahmen derart eingerichtet sind, dass eine feste Rotationsverbindung zwischen ihnen gesichert ist.

## Claims

1. System (1) for covering a motor-vehicle luggage compartment, said system comprising two lateral panels (2) lining said compartment and a luggage cover (3), said luggage cover comprising:
• a casing (4) provided with a transverse slot (5), with two lateral end pieces (6) mounted at the ends of said casing and with a winding shaft (7) the ends of which are mounted for rotation on said end pieces on a transverse axis (8), said shaft being actuated in rotation in a winding direction by a spring means, said end pieces being provided with reversible locking means cooperating with respective reciprocal means provided at the front part of said panels, said means and reciprocal means being arranged so that they can be made to cooperate by positioning of said luggage cover with said end pieces put in offset angular position, according said axis, with respect to the nominal angular position that they occupy when said luggage cover is mounted on said panels, the rotation of said end pieces in said nominal position activating said locking means,
• a curtain (9) passing through said slot and having a front edge associated with said shaft so as to be able to be wound around under the action of said spring means in order to pass reversibly from an unwound configuration of covering the luggage to a wound configuration of access to the luggage,
• a crossmember (10) for stiffening a rear edge of said curtain, said crossmember being provided with two transverse fingers (11) projecting laterally and being able to cooperate with reception means (12) provided at the rear of said panels to hold said curtain in the unwound configuration,
said system being **characterised in that**:
• said end pieces are each provided with a housing (13) accommodating a respective finger (11) when said curtain is brought into the wound configuration,
• said fingers and housings are arranged so as to constrain them to rotate with each other, so that the rotational actuation of said crossmember on said axis when said curtain is in the wound configuration causes a positioning of said end pieces in an offset angular position allowing removal of said luggage cover from said panels.

2. System according to claim 1, **characterised in that** the panels (2) are each provided with a rail (14) for sliding of a respective finger (11) when the curtain (9) passes from one configuration to the other.

3. System according to one of claims 1 or 2, **characterised in that** the panels (2) are each provided at the front part with a stud (15) projecting transversely towards the inside of said compartment, said stud forming a reciprocal locking means, an end piece (6) being provided with a locking means comprising an external element (16) provided with an external housing (17) and an internal element (18) provided with an internal housing (19), said housings emerging towards the outside of said compartment and being provided with a respective external (20) and internal (21) radial opening, on the understanding that:
• said internal element is housed in said external housing, said internal housing being sized so as to be able to house a respective stud therein,
• one of said elements is fixed with respect to said end piece and the other one of said elements is mounted so as to be able to rotate on said end piece on the transverse axis (8) so as to be able to pass reversibly from an angular unlocking configuration, where said openings are in line with each other, to allow inserting said stud into said internal housing, to an angular locking configuration, where said openings are offset with respect to each other, so as to close said internal opening again and to lock said stud in said internal housing.

4. System according to claim 3, **characterised in that** the external element (16) is fixed and the internal element (18) is able to rotate, said internal element and the corresponding stud (15) being arranged so that said stud is constrained to rotate with said internal element when it is housed in the internal housing (19).

5. System according to any one of claims 1 to 4, **characterised in that** the difference between the angular unlocking and locking configurations is between 30° and 90°.

6. System according to any one of claims 1 to 5, **characterised in that** the crossmember (10) is in the general form of a plate extending substantially horizontally.

7. Luggage cover (3) of a system (1) according to any one of the preceding claims, said luggage cover comprising:
• a casing (4) provided with a transverse slot (5), with two lateral end pieces (6) mounted at the ends of said casing and with a winding shaft the ends of which are mounted for rotation on said end pieces on a transverse axis (8), said shaft being actuated in rotation in a winding direction by a spring means, said end pieces being provided with reversible locking means intended to cooperate with respective reciprocal means provided at the front part of the panels (2),
• a curtain (9) passing through said slot and having a front edge associated with said shaft so as to be able to be wound around under the action of said spring means in order to pass reversibly from an unwound configuration of covering the luggage to a wound configuration of access to the luggage,
• a crossmember (10) for stiffening a rear edge of said curtain, said crossmember being provided with two laterally projecting transverse fingers (11) being intended to cooperate with reception means (12) provided at the rear of said panels to hold said curtain in the unwound configuration,
said luggage cover being **characterised in that**:
• said end pieces are each provided with a housing (13) accommodating a respective finger (11) when said curtain is brought into the wound configuration,
• said fingers and housings are arranged so as to constrain them to rotate together.
